# FASCICULE DE BREVET EUROPEEN

(11) **EP 2 135 776 B1**
(45) Date de publication et mention de la délivrance du brevet: **14.12.2011**
(21) Numéro de dépôt: 09163018.6
(22) Date de dépôt: 17.06.2009
(51) Int. Cl.: B60R 19/12

(54) **Pare-chocs arrière pour véhicule automobile utilitaire**
Hintere Stoßstange für Nutzfahrzeug
Rear bumper for a commercial vehicle

(30) Priorité: 18.06.2008 FR 0854021
(43) Date de publication de la demande: 23.12.2009
(73) Titulaire: Faurecia Bloc Avant, 92000 Nanterre (FR)
(72) Inventeur: Gonin, Vincent, 25600, SOCHAUX (FR)
(74) Mandataire: Blot, Philippe Robert Emile

(56) Documents cités:
- EP-A- 0 745 516
- EP-A- 1 103 428
- EP-A- 1 162 116
- EP-A- 1 293 389
- EP-A- 1 419 936
- DE-U1-202007 001 369

## Description

La présente invention concerne un pare-chocs arrière pour véhicule automobile utilitaire ou particulier de tourisme. Dans ce qui suit, on désigne par véhicule automobile utilitaire, un véhicule présentant un volume arrière important, tel qu'un fourgon léger, un monospace, un SUV (« Sport Utility Vehicule » pour véhicule utilitaire de sport), un ludospace, un minispace, etc.

Compte tenu, d'une part, des exigences de chargement du volume arrière, telles qu'un seuil de chargement abaissé, un plancher plat, etc., et, d'autre part, des exigences en vigueur sur la garde au sol d'un véhicule, les pare-chocs arrière connus des véhicules utilitaires possèdent une hauteur faible. En conséquence, ces pare-chocs connus présentent des performances réduites en matière de résistance aux chocs. De plus, la partie inférieure de ou des ouvrants arrière, qui descend jusqu'au niveau du seuil de chargement du volume intérieur, est souvent déformée en cas de choc. Cela entraîne des réparations importantes, de tôlerie et éventuellement de remplacement du système de fermeture des ouvrants, charnières et serrures.

Le document EP 1 162 116 A1 divulgue un pare-chocs d'un véhicule de tourisme, comportant un bloc central et deux blocs latéraux. Le bloc central est mobile entre une position de fermeture et une position d'ouverture. Le bloc central comporte une coque extérieure, entourant une unique traverse métallique, rectiligne et en caisson, dont les extrémités sont en appui, par l'intermédiaire d'amortisseurs de choc, sur les longerons du véhicule.

Les deux blocs latéraux sont fixes et permettent de ce fait au pare-chocs d'être conforme aux normes relatives aux chocs arrière et, en particulier, aux chocs à angle.

Les moyens de déplacement du bloc central d'une position à l'autre, ainsi que la constitution du pare-chocs en plusieurs parties mobiles les unes par rapport aux autres, confèrent à ce pare-chocs une architecture complexe.

En outre, les blocs latéraux fixes gênent l'accès au volume intérieur du véhicule et réduisent considérablement la dimension transversale du seuil de chargement.

Le document EP-1 103 428 A divulgue un pare-chocs arrière selon le préambule de la revendication 1.

L'invention a donc pour but de proposer un pare-chocs arrière de fabrication et de montage simple, tout en respectant les normes relatives aux chocs arrière.

Pour cela l'invention porte sur un pare-chocs arrière pour véhicule automobile monobloc et comportant une structure apte à répartir les forces générées lors d'un choc arrière vers une surface d'appui du pare-chocs, la surface d'appui étant située sur un bord latéral et/ou inférieur du pare-chocs et apte à venir en appui sur la caisse du véhicule.

L'invention porte également sur un véhicule automobile comportant un pare-chocs arrière tel que celui décrit précédemment.

L'invention et ses avantages seront mieux compris à la lecture de la description qui va suivre, donnée uniquement à titre d'exemple, et faite en se référant aux dessins annexés, dans lesquels :
- la figure 1 est une vue en perspective arrière d'un véhicule automobile utilitaire, le pare-chocs arrière étant en position de fermeture ;
- la figure 2 est identique à la figure 1, le pare-chocs arrière étant en position d'ouverture ;
- la figure 3 est une représentation en perspective d'un premier mode de réalisation de la structure du pare-chocs des figures 1 et 2 ;
- la figure 4 est une représentation en perspective d'une variante de réalisation du premier mode de réalisation de la structure du pare-chocs de la figure 3 ;
- la figure 5 est une représentation en perspective d'un se second mode de réalisation de la structure du pare-chocs ; et,
- la figure 6 est une représentation en perspective d'une variante de réalisation du second mode de réalisation de la structure de la figure 5. »

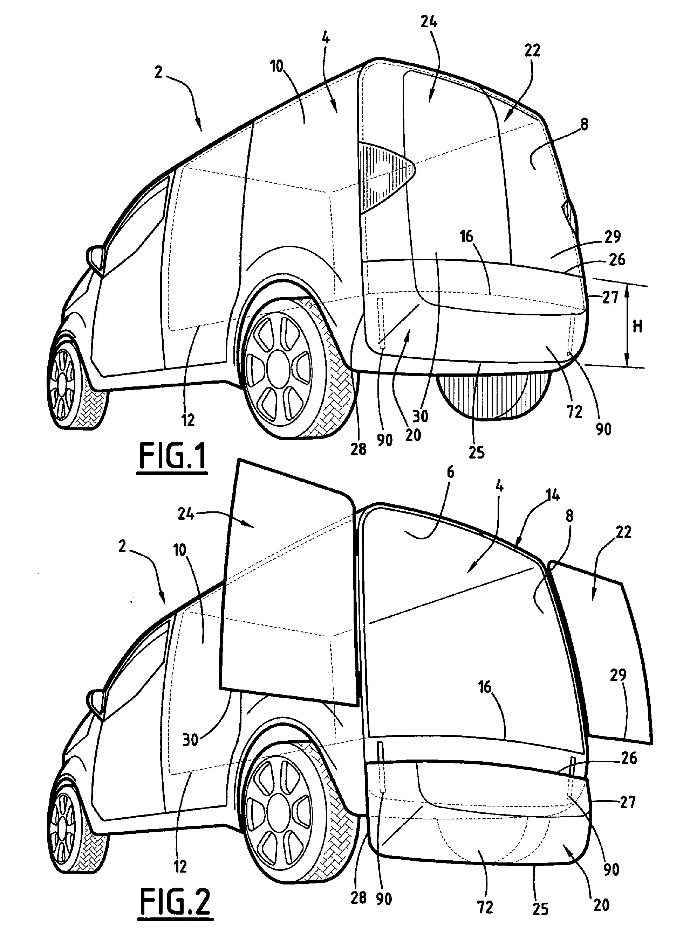

Les figures 1 et 2 représentent un véhicule automobile utilitaire 2 qui comporte un volume intérieur 4 arrière. Le volume intérieur 4 est délimité par un plafond 6, des parois droite 8 et gauche 10, et un plancher 12 essentiellement horizontal.

Le volume intérieur 4 est accessible par une ouverture arrière 14. Au niveau de l'ouverture 14, le plancher 12 présente un seuil de chargement 16 qui lui est coplanaire.

Le véhicule 2 comporte, à l'arrière, un pare-chocs 20 mobile entre une position d'ouverture et une position de fermeture, une porte droite 22 et une porte gauche 24. La porte droite 22, respectivement la porte gauche 24, est montée pivotante autour d'une charnière verticale sur la paroi droite 8, respectivement la paroi gauche 10, de la caisse du véhicule 2. Le bord inférieur 29, 30 des deux portes 22, 24 est situé à un niveau supérieur à celui du seuil de chargement 16.

En variante, le véhicule comporte un unique ouvrant constitué par un hayon monté pivotant sur la paroi supérieure de la caisse du véhicule.

Le pare-chocs 20 mobile est apte à être déplacé par translation, et/ou quasi-translation, selon une direction verticale, entre la position de fermeture, représentée à la figure 1, et la position d'ouverture, représentée à la figure 2.

Dans la position de fermeture, c'est-à-dire lorsque le pare-chocs 20 mobile se trouve dans sa position haute, le bord supérieur 26 du pare-chocs 20 mobile fait saillie verticalement au-dessus du seuil de chargement 16. Le bord supérieur 26 peut coopérer avec les bords inférieurs des portes droite 22 et gauche 24 pour fermer l'ouverture 14 d'accès au volume intérieur 4. Dans la position de fermeture, les bords latéraux droit 27 et gauche 28 du pare-chocs 20 sont affleurants aux parois latérales droite 8 et gauche 10 de la caisse du véhicule 2, tandis qu'un bord inférieur 25 du pare-chocs est affleurant à une paroi inférieure de la caisse du véhicule 2.

Dans la position d'ouverture, c'est-à-dire lorsque le pare-chocs 20 mobile est dans sa position basse, le bord supérieur 26 du pare-chocs 20 est situé au-dessous, ou, en variante, au niveau, du seuil de chargement 16 du plancher 12. Ainsi le pare-chocs 20 ne gène pas le chargement d'objet dans le volume intérieur 4, l'ouverture 14 étant totalement dégagée. On notera que le seuil de chargement 16 s'étend sur la totalité de la largeur du volume intérieur 4.

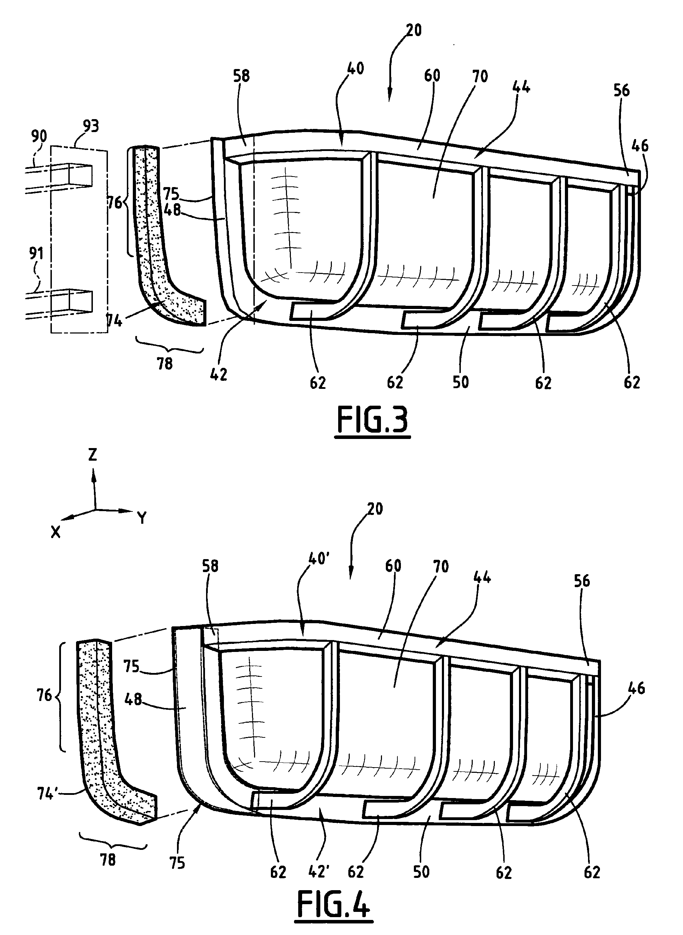

Le pare-chocs 20 mobile va maintenant être décrit plus en détail en référence à la figure 3. Le pare-chocs 20 mobile est monobloc et s'étend transversalement de la paroi latérale droite 8 à la paroi latérale gauche 10 du véhicule 2.

Le pare-chocs 20 mobile comporte une structure 40 permettant de répartir les forces générées lors d'un choc vers des bords périphériques du pare-chocs. Ces bords périphériques sont formés par les bords latéraux droit 27 et gauche 28 et le bord inférieur 25, et sont en appui sur des éléments de la caisse du véhicule 2.

Ces éléments de la caisse du véhicule constituent, de préférence, des surfaces verticales planes aptes à recevoir les bords périphériques du pare-chocs. Il s'agit, par exemple, de platines verticales étendues 93 droite et gauche, reliant, d'un même côté de la caisse du véhicule, en voie haute, la face arrière d'extrémité d'un longeron, et, en voie basse, la face arrière d'une équerre, s'étendant verticalement vers le bas à partir de la face orientée vers le bas du longeron. En variante, à la place d'une équerre, il peut s'agir d'un élément de carrosserie inférieure du véhicule.

La structure 40 est du type cage et est recouverte par au moins une peau extérieure. La structure 40, de forme générale en berceau, comporte une première traverse 42 conformée pour définir les bords latéraux droit 27 et gauche 28 et le bord inférieur 25 du pare-chocs 20. La structure 40 comporte une seconde traverse 44, conformée pour définir le bord supérieur 26 du pare-chocs 20.

La première traverse 42 est de forme en U, dont les extrémités sont recourbées vers le haut. Cette traverse 42 comporte des premiers bras latéraux droit 46 et gauche 48, reliés par une première partie intermédiaire 50. En position montée sur le véhicule 2, et en position de fermeture du pare-chocs 20 mobile, la première traverse 42 se situe dans un plan vertical, parallèle à la direction transversale du véhicule 2. Chacun des premiers bras latéraux droit 46 et gauche 48 définit le bord latéral droit 27 ou gauche 28 du pare-chocs 20 et vient dans le prolongement de la paroi droite 8 ou gauche 10 de la caisse du véhicule 2. De manière similaire, la première partie intermédiaire 50 définit le bord inférieur 25 du pare-chocs 20 mobile.

La seconde traverse 44 de la structure 40 est également de forme en U, dont les extrémités sont recourbées vers l'avant. Cette traverse 44 présente des seconds bras latéraux droit 56 et gauche 58, reliés par une portion intermédiaire 60. La seconde traverse 44 est conformée de manière à suivre le profil du bord supérieur 26 et par conséquent, des bords inférieurs 29 et 30 des portes droite 22 et gauche 24. En position montée sur le véhicule 2, et en position de fermeture du pare-chocs 20 mobile, la seconde traverse 44 se situe dans un plan horizontal et est située vers l'arrière par rapport au plan vertical de la première traverse 42. L'extrémité libre du premier bras latéral droit 46 est fixée, à angle droit, sur l'extrémité libre du second bras latéral droit 56. De manière similaire, l'extrémité libre du premier bras latéral gauche 48 est fixée sur l'extrémité libre du second bras latéral gauche 58.

La structure 40 comporte une pluralité de jambages 62 de forme arquée. Chaque jambage 62, disposé verticalement en position montée du pare-chocs 20 sur le véhicule 2, relie la première partie intermédiaire 50 de la première traverse 42 à la seconde partie intermédiaire 60 de la seconde traverse 44.

Les première et seconde traverses 42 et 44 et les jambages 62 sont réalisés en une matière plastique rigide. Les traverses sont avantageusement réalisées par injection d'un matériau en polymère thermoplastique (par exemple du polypropylène PP). Cette configuration est apte à dissiper intégralement l'énergie d'un choc de type « Danner », à participer à la réparabilité lors de chocs de moyenne intensité, mais aussi à protéger des occupants du véhicule, en particulier contre le « coup du lapin ». De préférence, les jambages 62 sont venus de matière avec les première et seconde traverses 42 et 44.

La structure 40 ainsi formée est recouverte extérieurement par une peau extérieure 72, non représentée sur la figure 3 pour plus de clarté, et éventuellement intérieurement par une peau intérieure 70. Les peaux intérieure 70 et extérieure 72 sont de préférence réalisées en un matériau plastique.

Une peau, intérieure ou extérieure, réalisée en une ou plusieurs parties, est fixée à la structure par une pluralité de moyens de fixation dont est pourvu le pare-choc.

La peau ne participant plus à la structure du pare-chocs, elle présente une faible épaisseur, entre 1,5 mm et 3 mm, ce qui diminue la masse et le coût de réalisation de la peau.

Pour améliorer l'absorption d'énergie lors d'un choc arrière, le pare-chocs 20 mobile est muni d'un amortisseur de choc droit (non représenté) et d'un amortisseur de chocs gauche 74. Il s'agit de préférence d'un élément, à section transversale rectangulaire, apte à être compressé selon son épaisseur pour dissiper une fraction de l'énergie transmise lors d'un choc arrière.

Dans ce premier mode de réalisation, l'amortisseur de chocs 74 est solidaire de la première traverse 42 et est positionné sur une face 75 de celle-ci. L'amortisseur de chocs 74 est constitué d'un profilé métallique, par exemple en aluminium, dont le volume intérieur est rempli d'une mousse apte à absorber de l'énergie lors de sa compression. En variante, l'amortisseur de chocs 74 est réalisé en un matériau en nid d'abeille d'aluminium ou d'un composite, en polymère injecté et caissonné, en mousse aluminium, ou en tout autre matériau économique susceptible d'absorber l'énergie d'un choc à basse ou moyenne vitesse. L'amortisseur de chocs 74 reprend la forme arquée du bras gauche 48 de la première traverse 42. L'amortisseur de chocs 74 comporte une portion supérieure 76 et une portion inférieure 78. Lorsque le pare-chocs 20 mobile est monté sur le véhicule 2 et est en position de fermeture, l'amortisseur de chocs 74 est situé entre la traverse 42 et le véhicule 2 : la portion supérieure 76 de l'amortisseur gauche 74 prend appui, du côté du véhicule 2, sur la paroi gauche 10, tandis que la portion inférieure 78 prend appui, du côté du véhicule 2, sur un longeron du châssis du véhicule 2. Une description similaire pourrait être faite au sujet de l'amortisseur de chocs droit.

Dans une variante de réalisation de ce premier mode de réalisation « en berceau », illustrée à la figure 4, la première traverse 42' comporte sur sa face antérieure un logement creux 75 destiné à recevoir un amortisseur de chocs 74' d'épaisseur adaptée.

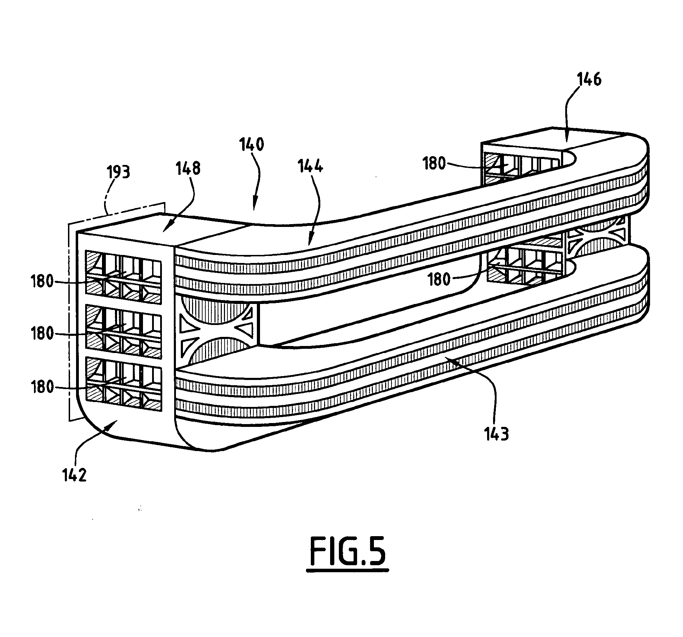

Dans un second mode de réalisation, illustré à la figure 5, les amortisseurs de chocs sont venus de matière avec la première traverse inférieure 142. Les portions d'extrémité 146 et 148 de la première traverse 42 sont formées par la superposition d'amortisseurs de chocs élémentaires 180. Le pare-chocs présente des performances accrues en termes de dissipation d'énergie, notamment lors de chocs 15 km/h du type « Danner ». On notera que dans ce second mode de réalisation, la structure 140 ne comporte pas de jambages verticaux entre les traverses 142 et 144, mais présente une troisième traverse 143, de forme arquée, disposée dans un plan horizontal, au-dessous de la seconde traverse 144, et reliant les portions d'extrémité 146 et 148 de la premières traverse 142.

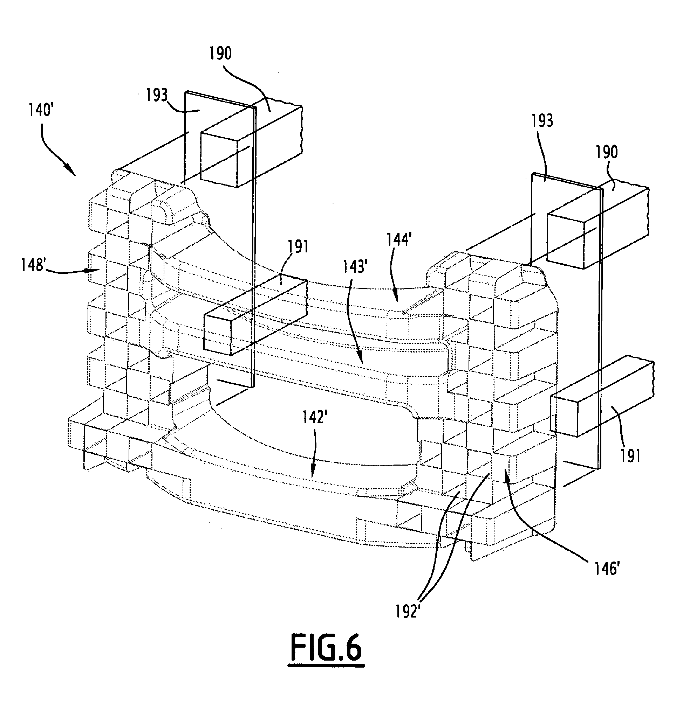

La figure 6 représente une variante de réalisation de ce second mode de réalisation, constituant en fait le mode de réalisation préférentiel, actuellement envisagé.

La structure 140' du pare-chocs arrière comprend une traverse supérieure 144' et une traverse inférieure 142'. Les extrémités recourbées vers le haut de la traverse inférieure 142' constituent des montants droit 146' et gauche 148' sensiblement verticaux, reliant les traverses supérieure et inférieure entre elles.

Avantageusement, la structure comporte une travers intermédiaire 143', située au-dessous du niveau de la traverse supérieure 144'.

Suivant cette configuration, la structure forme un cadre monobloc en matière plastique, fixé en appui directement contre la caisse du véhicule : la traverse supérieure 144' est située au niveau des longerons arrière 190 et la traverse inférieure 142' est située au niveau des pandards 191 constituant des pièces rigides situées sous les longerons 190.

Les traverses présentent avantageusement une ou plusieurs membrures de rigidification, de section ouverte vers l'avant ou vers l'arrière. L'inertie des membrures est de surcroît améliorée par la présence d'un réseau de nervures verticales.

En cas de collision, les traverses ont pour fonction de canaliser l'énergie du choc vers les montants qui propres à dissiper l'énergie.

Les montants 146' et 148' sont conformés pour faire office d'absorbeurs d'énergie. De préférence, chaque montant est prévu pour absorber une énergie supérieure à 5 kJ, de préférence comprise entre 6 et 10kJ, en cas de choc moyenne vitesse (« Danner »).

Chaque montant présente des alvéoles 192' s'étendant longitudinalement entre une face arrière et une face avant des montants. Ces alvéoles peuvent être borgnes et réalisées en quinconces (damier) afin de supprimer les dépouilles.

Lorsque le pare-chocs est en position fermée, chaque montant est en regard d'un appui vertical prévu sur le côté de la caisse, par exemple sur une platine étendue 193 reliant les extrémités d'un longeron 190 et d'un pendard 191 situés d'un même côté du véhicule.

Chaque montant recouvre la majeure partie de la surface d'appui offerte par la platine étendue 193 correspondante.

Chaque platine étendue 193 offre une surface d'appui rigide de grande surface, avantageusement comprise entre 100 et 180 mm en largeur, et entre 350 et 450 mm en hauteur, ce qui correspond à une aire sensiblement comprises entre 3,5 et 8 dm².

De ce fait, les montants travaillent uniformément en compression en cas de choc, sans flexion dans leur partie médiane située verticalement entre les traverses supérieure 144' et inférieure143'.

Cet avantage permet une conception homogène des montants, possédant des alvéoles analogues uniformément réparties.

Dans le cas d'un pare-chocs mobile, chaque montant est lié à la caisse par des moyens de fixation, tels que des charnières, des glissières, ou l'équivalent, assurant la cinématique. La partie antérieure des montants accueille ces moyens de fixation.

La structure alvéolaire des montants facilite la fabrication et confère aux montants une capacité d'absorption d'énergie suffisante sur une épaisseur relativement retreinte.

La structure est obtenue d'un seul bloc, par exemple par moulage par injection de matière plastique.

Il peut être démoulé suivant une unique direction correspondant à la direction longitudinale du véhicule automobile lorsque le bouclier est fixé sur le châssis. Ainsi, la structure peut être obtenue de façon simple, avec un coût de fabrication faible. Les alvéoles des montants autorisent des dépouilles faibles, voire nulles, ce qui limite le poids et le coût de fabrication de la structure. Les pièces constitutives du pare-chocs sont donc légères et permettent une économie de matière première.

En outre, les dépouilles faibles voir nulles dans les montants en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction de l'écrasement des montants, ce qui augmente l'énergie dissipée et diminue la course d'absorption, tout en restant sous le seuil de déformation des longerons. Il en résulte que l'énergie d'un choc peut être dissipée moyennant une course réduite, et que la solution s'avère très compacte.

Les montants présentent de préférence une épaisseur longitudinale comprise entre 120 et 220 mm. Ceci permet une absorption d'énergie efficace, tout en limitant le porte-à-faux du pare-chocs.

Le pare-chocs 20 est monté sur le véhicule 2 par l'intermédiaire d'un moyen de support permettant le mouvement du pare-chocs 20 entre sa position haute et sa position basse, et inversement. Le moyen de déplacement comporte des glissières de guidage 90 permettant un mouvement de translation du pare-chocs 20 par rapport à la caisse du véhicule. De telles glissières présentent le défaut d'être déformables, ce qui peut nécessiter leur remplacement à la suite d'un choc. En variante, le moyen de déplacement comporte des tringleries articulées sensiblement en parallélogramme permettant un mouvement de translation ou de quasi-translation du pare-chocs 20 par rapport à la caisse du véhicule.

Selon ce mode de réalisation, à tout moment de son utilisation, le pare-chocs 20 présente sensiblement la même orientation. En particulier, en position d'ouverture, le pare-chocs 20 joue encore un rôle de protection de l'arrière du véhicule.

On notera qu'en position de fermeture, le bord supérieur 26 du pare-chocs 20 mobile fait saillie au-dessus du seuil de chargement 16 et forme une ridelle permettant de garantir que des petits objets posés sur le plancher 12 du volume intérieur 4 ne glissent pas hors du véhicule 2 alors qu'il est en mouvement et que ses portes 22 et 24 sont laissées ouvertes, à cause par exemple de la présence d'un objet de grande longueur qui ne rentre pas intégralement dans le volume intérieur 4.

Le pare-chocs mobile peut former un marchepied lorsqu'il est placé en position d'ouverture. L'homme du métier saura comment choisir les matériaux adaptés permettant au pare-chocs mobile de supporter les contraintes liées à cette utilisation.

En cas de choc arrière, la structure 40 du pare-chocs 20 mobile permet de répartir les efforts : une fraction des forces appliquées à la seconde traverse 44, au niveau de sa partie intermédiaire 60 ou des ses bras 56 et 58 arqués, est transférée vers la première traverse 42 au niveau des points de jonction entre les première et seconde traverses 42 et 44 ; l'autre fraction des forces appliquées est guidée, par les jambages 62, vers la partie intermédiaire 50 de la première traverse 42. La première traverse 42 transmet ensuite les forces qui lui sont appliquées directement, ou indirectement par l'intermédiaire des amortisseurs de choc, à la caisse et aux longerons du châssis du véhicule 2.

Le pare-chocs mobile selon l'invention présente une hauteur H importante par rapport aux pare-chocs équipant les véhicules utilitaires selon l'art antérieur, tout en maximisant l'accès au volume intérieur. Les bords inférieurs des ouvrants sont situés en hauteur, et ne descendent pas jusqu'au niveau du plancher du volume intérieur. Ainsi, en cas de choc, le pare-chocs mobile joue son rôle de dissipateur d'énergie. Il est déformé et éventuellement brisé. En revanche, les parties inférieures des ouvrants présentent moins de risque d'être touchées durant ce même choc. On réduit d'autant le nombre des pièces abîmées et les coûts de réparation afférents.

Alors que dans le mode de réalisation décrit, le véhicule utilitaire comporte deux portes battantes, il est parfaitement possible que le véhicule utilitaire comporte une porte unique à axe vertical, ou un ouvrant de type hayon ayant un axe horizontal et une partie mobile s'ouvrant vers le haut. Ce dernier mode de réalisation est particulièrement approprié au cas d'un véhicule particulier SUV tel que ludospace, monospace.

Avantageusement, le pare-chocs selon l'invention étant monobloc, le nombre de pièces est réduit. Il présente donc un coût d'installation ou de remplacement faible. Il est d'une structure simple lui assurant un coût de fabrication réduit.

En variante, le pare-chocs est monté mobile en rotation autour d'un axe horizontal colinéaire à la paroi inférieure du volume de chargement.

Dans les deux cas, des moyens destinés à assurer la cinématique, tels que les charnières, ainsi que les moyens de maintien en position, tels que des systèmes de verrouillage et des serrures, sont situés sur la partie inférieure et/ou supérieure du compartiment arrière du véhicule, avantageusement sur des platines étendues.

En variante, le pare-chocs est statique, fixé rigidement à la caisse du véhicule. Dans ce cas, chaque montant formant les extrémités relevées de la première traverse inférieure est fixé rigidement sur la caisse, par exemple sur des platines étendues, par vissage ou par collage.

L'homme du métier constatera donc que la structure de pare-chocs venant d'être décrite permet de dissiper l'intégralité de l'énergie d'un choc arrière moyenne vitesse de type assurance, notamment « Danner 15km/h », en protégeant la caisse.

Le pare-chocs arrière venant d'être décrit permet une absorption des chocs satisfaisante tout en ne comportant qu'un nombre réduit d'éléments constitutifs. Il peut, par conséquent, être obtenu à faible coût.

## Revendications

1. Pare-chocs arrière pour véhicule automobile (2), comporte une structure (40, 40', 140', 140') apte à répartir les forces générées lors d'un choc arrière vers une surface d'appui du pare-chocs (20) et comportant :
- une première traverse (42, 42', 142, 142') en forme de « U » [p4, I19] à extrémités relevées, conformée pour définir les bords inférieur (25) et latéraux (27, 28) du pare-chocs (20) ; et
- une seconde traverse (44, 144, 144') conformée pour définir le bord supérieur (26) du pare-chocs et dont les extrémités sont en appui sur les extrémités relevées de la première traverse, **caractérisé en ce qu'**il
la surface d'appui du pare-chocs étant située au moins sur un bord latéral (27, 28) du pare-chocs et étant apte à venir en appui sur la caisse du véhicule (2).

2. Pare-chocs selon la revendication 1, **caractérisé en ce que** la première traverse se situe dans un plan vertical, parallèle à la direction transversale du véhicule sur lequel le pare-chocs est destiné à être monté, et **en ce que** la seconde traverse se situe dans un plan horizontal.

3. Pare-chocs selon la revendication 2, **caractérisé en ce que** la structure comporte au moins une autre traverse située à un niveau inférieur par rapport au niveau de la seconde traverse et dont les extrémités sont en appui sur les extrémités relevées de la première traverse.

4. Pare-chocs selon la revendication 2 ou 3, **caractérisé en ce que** la structure est du type cage et comporte une pluralité de jambages (62) reliant les première et seconde traverses entre elles.

5. Pare-chocs selon la revendication 4, **caractérisé en ce que** les jambages (62) sont venus de matière avec les première et seconde traverses.

6. Pare-chocs selon l'une quelconque des revendications 2 à 5, **caractérisé en ce que** la seconde traverse (44) est en forme de « U » [p.4, 1.29] et comporte des extrémités latérales recourbées vers l'avant, et **en ce que** les jambages (62) ont une extrémité inférieure recourbée vers l'avant, la seconde traverse étant située vers l'arrière par rapport au plan vertical de la première traverse

7. Pare-chocs selon l'un quelconque des revendications précédentes, **caractérisé en ce que** la structure (40, 40', 140, 140') est réalisée en une matière plastique rigide.

8. Pare-chocs selon l'une quelconque des revendications 1 à 7, **caractérisé en ce que** la structure (40, 40', 140, 140') est recouverte par une peau (70, 72).

9. Pare-chocs selon l'une quelconque des revendications 1 à 8, **caractérisé en ce qu'**il comporte au moins un amortisseur de choc, définissant la surface d'appui du pare-chocs.

10. Pare-chocs selon la revendication 9, **caractérisé en ce que** l'amortisseur de choc est venu de matière avec la structure (140, 140'), et notamment avec des extrémités recourbées vers le haut de la première traverse (140, 142') conformée pour définir les bords inférieur et latéraux du pare-chocs.

11. Pare-chocs selon la revendications 9 ou la revendication 10, **caractérisé en ce que** l'amortisseur de chocs possède une épaisseur comprise entre 120 et 220 mm.

12. Pare-chocs selon l'une quelconque des revendications 9 à 11, **caractérisé en ce que** l'amortisseur de chocs comporte une pluralité d'alvéoles (192') s'étendant longitudinalement.

13. Pare-chocs selon l'une quelconque des revendications précédentes, **caractérisé en ce qu'**il est mobile entre une position de fermeture et une position d'ouverture, notamment par translation et/ou quasi-translation selon une direction verticale.

14. Pare-chocs selon l'une quelconque des revendications précédentes, **caractérisé en ce qu'**il est monobloc.

15. Véhicule automobile comportant un pare-chocs arrière, **caractérisé en ce que** le pare-chocs arrière est un pare-chocs (20) selon l'une quelconque des revendications 1 à 14.

## Claims

1. Rear bumper for an automotive vehicle (2), comprising a structure (40, 40', 140, 140') designed to distribute the forces generated in the event of a rear impact towards a support surface of the bumper (20) and comprising:
- a "U" shaped first cross-member (42, 42', 142, 142') [p. 4, 1. 19] with upwardly turned ends, shaped so as to define the bottom (25) and side (27, 28) edges of the bumper (20); and
- a second cross-member (44, 144, 144') shaped so as to define the top edge (26) of the bumper and the ends of which are supported on the upwardly turned ends of the first cross-member,
**characterised in that** the support surface of the bumper is disposed at least on a side edge (27, 28) of the bumper and is designed to be supported on the body of the vehicle (2).

2. Bumper as claimed in claim 1, **characterised in that** the first cross-member is disposed in a vertical plane parallel with the transverse direction of the vehicle on which the bumper is intended to be mounted, and **in that** the second cross-member is disposed in a horizontal plane.

3. Bumper as claimed in claim 2, **characterised in that** the structure comprises at least one other cross-member disposed on a lower level than the level of the second cross-member and the ends of which are supported on the upwardly turned ends of the first cross-member.

4. Bumper as claimed in claim 2 or 3, **characterised in that** the structure is of the cage type and comprises a plurality of jambs (62) connecting the first and second cross-members to one another.

5. Bumper as claimed in claim 4, **characterised in that** the jambs (62) are integrally cast with the material of the first and second cross-members.

6. Bumper as claimed in any one of claims 2 to 5, **characterised in that** the second cross member (44) is "U" shaped [p. 4, 1. 29] and has forwardly curved side ends, and **in that** the jambs (62) have a forwardly curved bottom end, the second cross-member being disposed towards the rear relative to the vertical plane of the first cross-member.

7. Bumper as claimed in any once of the preceding claims, **characterised in that** the structure (40, 40', 140, 140') is made from a rigid plastic material.

8. Bumper as claimed in any one of claims 1 to 7, **characterised in that** the structure (40, 40', 140, 140') is covered by a skin (70, 72).

9. Bumper as claimed in any one of claims 1 to 8, **characterised in that** it has at least one shock absorber defining the support surface of the bumper.

10. Bumper as claimed in claim 9, **characterised in that** the shock absorber is integrally cast with the material of the structure (140, 140') and in particular with the upwardly curved ends of the first cross-member (140, 142') shaped so as to define the bottom and side edges of the bumper.

11. Bumper as claimed in claim 9 or claim 10, **characterised in that** the shock absorber has a thickness ranging between 120 and 220 mm.

12. Bumper as claimed in any one of claim 9 to 11, **characterised in that** the shock absorber has a plurality of longitudinally extending cells (192').

13. Bumper as claimed in any one of the preceding claims, **characterised in that** it is displaceable between a closed position and an open position, in particular by means of a translating and/or semi-translating movement in a vertical direction.

14. Bumper as claimed in any one of the preceding claims, **characterised in that** it is a solid bloc.

15. Automotive vehicle having a rear bumper, **characterised in that** the rear bumper is a bumper (20) is claimed in any one of claims 1 to 14.

## Patentansprüche

1. Hinterer Stoßfänger für ein Kraftfahrzeug (2), aufweisend eine Struktur (40, 40', 140, 140'), die in der Lage ist, die bei einem Heckaufprall erzeugten Kräfte in Richtung zu einer Stützfläche des Stoßfängers (20) zu verteilen, und die aufweist:
- einen ersten Querträger (42, 42', 142, 142') in "U"-Form [S. 4, Z. 19] mit hochgezogenen Enden, der angepasst ist, um den unteren (25) und die seitlichen (27, 28) Ränder des Stoßfängers (20) zu definieren, und
- einen zweiten Querträger (44, 144, 144'), der angepasst ist, um den oberen Rand (26) des Stoßfängers zu definieren, und dessen Enden an den hochgezogenen Enden des ersten Querträgers abgestützt: sind, **dadurch gekennzeichnet, dass**
die Stützfläche des Stoßfängers mindestens an einem seitlichen Rand (27, 28) des Stoßfänger angeordnet ist und eingerichtet ist, an der Karosserie des Fahrzeugs (2) abgestützt zu serin.

2. Stoßfänger gemäß Anspruch 1, **dadurch gekennzeichnet, dass** der erste Querträger in einer vertikalen Ebene parallel zu der Querrichtung des Fahrzeugs, an dem der Stoßfänger zu montieren ist, angeordnet ist, und das der zweite Querträger in einer horizontalen Ebene angeordnet ist.

3. Stoßfänger gemäß Anspruch 2, **dadurch gekennzeichnet, dass** die Struktur mindestens einen weiteren Querträger aufweist, der bezüglich der Höhe des zweiten Querträgers auf einer niedrigeren Höhe angeordnet ist und dessen Enden an den hochgezogenen Enden des ersten Querträgers abgestützt sind.

4. Stoßfänger gemäß Anspruch 2 oder 3, **dadurch gekennzeichnet, dass** die Struktur vom Typ eines Käfigs ist und eine Mehrzahl von Verstrebungen (62) aufweist, die den ersten und den zweiten Querträger miteinander verbinden.

5. Stoßfänger gemäß Anspruch 4, **dadurch gekennzeichnet, dass** die Verstrebungen (62) aus einem Stück mit dem ersten und dem zweiten Querträger sind.

6. Stoßfänger gemäß irgendeinem der Ansprüche 2 bis 5, **dadurch gekennzeichnet, dass** der zweite Querträger (44) die Form eines "U" [S. 4, Z. 29] hat und seitliche Enden aufweist, die nach vorne hin gekrümmt sind, und dass die verstrebungen (62) ein unteres Ende aufweisen, das nach vorne hin gekrümmt ist, wobei der zweite Querträger bezüglich der vertikalen Ebene des ersten Querträgers in Richtung nach hinten angeordnet ist.

7. Stoßfänger gemäß irgendeinem der vorhergehenden Ansprüche, **dadurch gekennzeichnet, dass** die Struktur (40, 40', 140, 140') aus einem starren Kunststoff hergestellt ist.

8. Stoßfänger gemäß irgendeinem der Ansprüche 1 bis 7, **dadurch gekennzeichnet, dass** die Struktur (40, 40', 140, 140') von einer Hülle (70, 72) bedeckt ist.

9. Stoßfänger gemäß irgendeinem der Ansprüche 1 bis 8, **dadurch gekennzeichnet, dass** er mindestens einen Stoßdämpfer aufweist, der die Stützfläche des Stoßfängers definiert.

10. Stoßfänger gemäß Anspruch 9, **dadurch gekennzeichnet, dass** der Stoßdämpfer aus einem Stück mit der Struktur (140, 140') und insbesondere mit in Richtung nach oben gekrümmten Enden des ersten Querträgers (140, 142') ist, der angepasst ist, um den unteren und die seitlichen Ränder des Stoßfängers zu definieren.

11. Stoßfänger gemäß Anspruch 9 oder Anspruch 10, **dadurch** gekennzeicnnet, dass der Stoßdämpfer eine Dicke zwischen 120 mm und 220 mm hat.

12. Stoßfänger gemäß irgendeinem der Ansprüche 9 bis 11, **dadurch gekennzeichnet, dass** der Stoßdämpfer eine Mehrzahl von Kammern (192') aufweist, die sich in Längsrichtung erstrecken.

13. Stoßfänger gemäß irgendeinem der vorhergehenden Ansprüche, **dadurch gekennzeichnet, dass** er zwischen einer Schließposition und einer Öffnungsposition insbesondere durch Translation und/oder Quasitranslation entlang einer vertikalen Richtung bewegbar ist.

14. Stoßfänger gemäß irgendeinem der vorhergehenden Ansprüche, **dadurch gekennzeichnet, dass** er aus einem Stück ist.

15. Kraftfahrzeug, das einen hinteren Stoßfänger aufweist, **dadurch gekennzeichnet, dass** der hintere Stoßfänger ein Stoßfänger (20) gemäß irgendeinem der Ansprüche 1 bis 14 ist.
